(19) Europäisches Patentamt
European Patent Office
Office européen des brevets

(11) **EP 0 956 151 B1**

(12) **EUROPÄISCHE PATENTSCHRIFT**

(45) Veröffentlichungstag und Bekanntmachung des Hinweises auf die Patenterteilung:
**12.03.2003   Patentblatt 2003/11**

(51) Int Cl.⁷: **B01F 5/02**, B01F 5/04, B01J 19/00, B01J 19/24

(21) Anmeldenummer: **98905302.0**

(22) Anmeldetag: **16.01.1998**

(86) Internationale Anmeldenummer:
**PCT/EP98/00217**

(87) Internationale Veröffentlichungsnummer:
**WO 98/033582 (06.08.1998 Gazette 1998/31)**

(54) **VERFAHREN UND VORRICHTUNG ZUR HERSTELLUNG EINES DISPERSEN GEMISCHES**

METHOD AND DEVICE FOR PRODUCING A DISPERSED MIXTURE

PROCEDE ET DISPOSITIF DE FABRICATION D'UN MELANGE DISPERSE

(84) Benannte Vertragsstaaten:
**AT BE CH DE DK ES FI FR GB GR IE IT LI NL PT SE**

(30) Priorität: **01.02.1997   DE 19703779**

(43) Veröffentlichungstag der Anmeldung:
**17.11.1999   Patentblatt 1999/46**

(73) Patentinhaber:
 • **Forschungszentrum Karlsruhe GmbH**
  **76133 Karlsruhe (DE)**
 • **BAYER AG**
  **51368 Leverkusen (DE)**

(72) Erfinder:
 • **SCHUBERT, Klaus**
  **D-76227 Karlsruhe (DE)**
 • **BIER, Wilhelm**
  **D-76344 Eggenstein-Leopoldshafen (DE)**
 • **LINDER, Gerd**
  **D-76149 Karlsruhe (DE)**
 • **HERRMANN, Erhard**
  **52930 Atizapan de Zaragoza (MX)**
 • **Klinksiek, Bernd**
  **51429 Bergisch Gladbach (DE)**
 • **Krumbach, Bernd**
  **51377 Leverkusen (DE)**

(74) Vertreter: **Rückert, Friedrich, Dr.**
  **Forschungszentrum Karlsruhe GmbH**
  **Patente und Lizenzen**
  **Weberstrasse 5**
  **76133 Karlsruhe (DE)**

(56) Entgegenhaltungen:
WO-A-88/06941          WO-A-95/30476
DE-A- 3 926 466        DE-A- 19 540 292
GB-A- 2 073 604

 • **PATENT ABSTRACTS OF JAPAN vol. 6, no. 174 (C-123), 8.September 1982 & JP 57 087820 A (TEIJIN LTD), 1.Juni 1982,**

**Beschreibung**

Die Erfindung betrifft ein Verfahren und eine Vorrichtung zur Herstellung eines dispersen Gemisches gemäß Anspruch 1 und Anspruch 2.

Dispergieren ist die Bezeichnung für die Zerteilung und möglichst feine Verteilung eines Stoffes in einem anderen. Die fertige Mischung heißt Dispersion. In einer Dispersion liegen eine oder mehrere dispers verteilte Phasen, die inneren Phasen, in einer kontinuierlichen Phase, der äußeren Phase, vor. Ist die disperse Phase vollständig in der kontinuierlichen Phase löslich, so geht die Dispersion sofort in eine homogene Mischung über. Typische Beispiele von durch Dispergieren hergestellten Dispersionen aus dem Bereich der chemischen Verfahrenstechnik sind

♦    Flüssigkeit-Flüssigkeit-Systeme:

> Emulsionen (disperse Phase: Flüssigkeit, kontinuierliche Phase: Flüssigkeit) ; Beispiele: Öl-in-Wasser-Emulsionen,   Wasser-in-Öl-Emulsionen

♦    Gas-Flüssigkeit-Systeme:

> -   begaste Flüssigkeiten bzw. Schmelzen (disperse Phase: Gas,kontinuierliche Phase: Flüssigkeit), z. B. Schäume
> -   Nebel (disperse Phase: Flüssigkeit, kontinuierliche Phase: Gas)

♦    Flüssigkeit-Feststoff-Systeme:

> Suspensionen (disperse Phase: Feststoff, kontinuierliche Phase: Flüssigkeit), bei denen z. B. die Feststoffphase beim Dispergiervorgang durch Fällung eines übersättigt gelösten Stoffes entsteht.

Dispergieren ist der rein physikalische Vorgang des Zerteilens wie im Fall der Herstellung von Emulsionen; der Dispergiervorgang wird z. B. eingesetzt als einleitender Primärdispergierschritt oder als einer Primärdispergierung nachgeschalteter Redispergierschritt bei der Durchführung chemischer Reaktionen in zwei- und mehrphasigen Reaktionssystemen.

Bei der Durchführung chemischer Reaktionen bestimmt das Verhältnis der Geschwindigkeit von Stofftransport zu Kinetik, inwieweit durch Intensivierung des Dispergiervorganges, d. h. durch Vergrößerung der Phasengrenzflächen zwischen den an der Reaktion beteiligten Phasen, der Reaktionsablauf beschleunigt werden kann . So ist bei sehr schnellen chemischen Reaktionen in der Regel der Stofftransport zwischen den an der Reaktion beteiligten Phasen für die Geschwindigkeit der chemischen Umsetzung und damit für die erzielbare Reaktorleistung maßgebend. Dementsprechend besteht eine wesentliche Aufgabe beim Dispergieren darin, möglichst viel Phasengrenzfläche pro Reaktionsvolumen zu erzeugen, d. h. möglichst kleine disperse Partikeln (z. B. Flüssigkeitstropfen, Gasblasen), und den dafür erforderlichen Energieaufwand zu minimieren.

Technische Dispergierverfahren haben zum Ziel, eine oder mehrere Komponenten gleichmäßig und reproduzierbar in einer kontinuierlichen Phase zu zer- und verteilen. Zielgrößen sind dabei u. a. die reproduzierbare Herstellung von Dispersionen mit definierten Partikelgrößen für die disperse Phase, möglichst kleine Partikeln mit entsprechend großer volumenspezifischer Phasengrenzfläche zwischen disperser und kontinuierlicher Phase sowie enge Partikelgrößenverteilungen. Die zum Dispergieren eingesetzte Dispergiervorrichtung ist so zu gestalten und auszulegen, daß sie die Dispergieraufgabe mit minimalem Energieaufwand, d. h. mit hoher Effizienz, bewältigt.

Gegenwärtig werden zum Dispergieren eine Vielzahl von Dispergierapparate eingesetzt. Prinzipiell zu unterscheiden sind dynamische und statische Dispergierapparate.

Bei dynamischen Dispergierapparaten werden im allgemeinen sowohl die disperse Phase als auch die kontinuierliche Phase in Bewegung versetzt, wobei der Energieeintrag über die turbulente Strömungsenergie der bewegten Phasen erfolgt. Bei statischen Dispergierapparaten wird im allgemeinen nur die disperse Phase in Bewegung versetzt.

Dynamische Dispergierapparate für Flüssigkeit-Flüssigkeit-Systeme sind z. B. Düsen, Düsen kombiniert mit nachgeschalteten Strahldispergatoren, Rührer sowie Rotor-Stator-Systeme, für Gas-Flüssigkeit-Systeme z. B. Injektoren bzw. Ejektoren, Venturidüsen und Rührer sowie für Flüssigkeit-Feststoff-Systeme z. B. Fälldüsen und Rührer.

Statische Dispergierapparate für Flüssigkeit-Flüssigkeit-, Gas-Flüssigkeit- sowie Feststoff-Flüssigkeit-Systeme sind z. B. Einsteckrohre, Siebböden, Lochplatten aus Metall, Gummi oder Kunststoff, wahlweise auch mit pulsierender Platte, Rohrverteilerringe sowie Sinterplatten aus Glas oder Metall; Sinterplatten werden vorzugsweise für Gas-Flüssigkeit-Systeme eingesetzt.

Nachteilig wirkt sich beim Einsatz der bekannten dynamischen Dispergierapparate aus, daß die Zerteilung der dispersen Phase in einem räumlich ausgedehnten turbulenten Scherfeld erfolgt, wobei die Ungleichverteilung der lokalen Energiedissipationsraten zu breiteren Partikelgrößenverteilungen für die disperse Phase führt. Zur Herstellung von Dispersionen mit geringen mittleren Partikelabmessungen für die disperse Phase und entsprechend großer volumenspezifischer Phasengrenzfläche ist ein vergleichsweise großer Energieaufwand erforderlich.

Derzeit verfügbare statische Dispergierapparate verhalten sich gegenüber dynamisch betriebenen Apparaten meist energetisch günstiger, d. h. das Verhältnis von erzeugter volumenspezifischer Phasengrenzfläche zu geleistetem Energieaufwand ist größer. Die mit statischen Apparaten absolut erzielbare volumenspezifische Phasengrenzfläche ist in der Regel jedoch klein.

Die DE 44 16 343 A1 beschreibt einen statischen Mikrovermischer, der aus einem Stapel von Folien zusammengesetzt ist. In die Folien sind auf einer Seite jeweils parallele Scharen schräger Kanäle eingearbeitet. Die Folien sind in der Weise gestapelt, daß die schrägen Kanäle in jeder zweiten Folie spiegelbildlich zu den Kanälen der beiden benachbarten Folien verlaufen. Die Nuten bilden zusammen mit der glatten Seite einer benachbarten Folie geschlossene Kanäle. Mit dem Mikrovermischer lassen sich Fluide miteinander vermischen. Die Vermischung erfolgt in der Weise, daß die schrägen Kanäle abwechselnd mit jeweils einem Fluid beaufschlagt werden. Beim Austritt der Fluide aus dem Mikrovermischer bilden sich feinste Fluid-Strahlen, die sich vollständig miteinander vermischen. Bei dem Mikrovermischer findet die Vermischung daher außerhalb der Vorrichtung statt.

Gegenstand der DE 44 33 439 A1 ist ein Verfahren zur Durchführung chemischer Reaktionen mittels der Vorrichtung, die in der oben genannten DE 44 16 343 A1 beschrieben ist.

In der DE 39 26 466 A1 ist ein Mikroreaktor beschrieben, in dem die Vermischung von Fluiden innerhalb des Mikroreaktors erfolgen soll. Durch eine in einer Zwischenfolie befindliche querverlaufende Rille, die einen Mischraum bildet, werden zwei Reaktionspartner A und B in Teilströme aufgeteilt. Zwei Fluidströme werden in parallelen Mikrokanälen, die unmittelbar unterhalb bzw. oberhalb der Zwischenfolie verlaufen, geführt und sollen in der querverlaufenden Rille in der Zwischenfolie miteinander vermischt werden. Die Kanäle unterhalb der Zwischenfolie sind zu den Kanälen oberhalb der Zwischenfolie senkrecht angeordnet. Konstruktiv ergibt sich ein Folientriplett bestehend aus einer Folie für A, einer Zwischenfolie mit der querverlaufenden Rille und einer Folie für B. Dieses Triplett kann mehrfach aufeinandergestapelt werden.

Beim bekannten Mikroreaktor strömen die noch unvermischten Fluide durch unterschiedlich lange Kanäle, bis sie auf die querverlaufenden Rillen treffen. Daraus resultiert zumindest eine unvollständige Vermischung innerhalb des Mikroreaktors. Außerdem soll jeweils ein Anteil beider Stoffströme die querverlaufende Rille passieren und innerhalb der Kanäle für den jeweils anderen Stoffstrom weitergeführt werden. Dies würde einen hohen Druckverlust in den betreffenden Anteilen verursachen, weshalb der bekannte Mikroreaktor ohne Modifikation der dargestellten Ausführungsformen nicht einsetzbar ist.

Aus der WO-A-9630113 ist eine Vorrichtung zum Mischen kleiner Flüssigkeitsmengen bekannt, bei dem eine zu durchmischende Flüssigkeit in einen Einlaßkanal eintritt, hier auf mindestens zwei abzweigende, in einer Ebene liegende Mikrokanäle aufgeteilt wird, durch ein gegenüber der Ebene um 90° gedrehtes Zusammenflußelement wieder miteinander vereinigt und aus dem Zusammenflußelement in einen weiteren, in der Ebene liegenden Mikrokanal geleitet wird. Der weitere Mikrokanal kann den Einlaßkanal für eine weitere derartige Vorrichtung bilden. Die Vorrichtung enthält keine separaten Eintrittskanäle für die zu vermischenden Komponenten der Flüssigkeit.

Der Erfindung liegt die Aufgabe zugrunde, ein Verfahren und eine Vorrichtung zur Herstellung eines dispersen Gemisches aus mindestens zwei Phasen vorzuschlagen, wobei das Gemisch innerhalb der Vorrichtung erzeugt wird. Bei der Dispergierung der Phasen soll sich ein geringerer Druckabfall einstellen.

Die Aufgabe wird erfindungsgemäß durch das in Patentanspruch 1 beschriebene Verfahren und die in Patentanspruch 2 beschriebene Vorrichtung gelöst. In den weiteren Patentansprüchen sind bevorzugte Ausgestaltungen der Vorrichtung angegeben.

Beim erfindungsgemäßen Verfahren werden sowohl die erste als auch die zweite Phase in vorzugsweise parallele Teilströme aufgeteilt. Die Teilströme der ersten Phase liegen in einer ersten und die Teilströme der zweiten Phase in einer zweiten ebenen Schicht. Innerhalb der jeweiligen ebenen Schichten werden die Teilströme der ersten Phase in einem Winkel in der Weise gegen die Teilströme der zweiten Phase geführt, daß der Dispergier- und Vermischungsvorgang ausgelöst wird. Die erste und die zweite ebene Schicht sind parallel zueinander angeordnet und grenzen unmittelbar aneinander.

Die Dicke der ebenen Schichten kann weniger als 1000 µm, vorzugsweise weniger als 300 µm betragen.

Die erfindungsgemäße Vorrichtung ist aus mindestens einer Grundeinheit aufgebaut. Die Grundeinheit besteht aus zwei Folien, in die jeweils auf einer Seite eine Schar paralleler Nuten eingebracht ist. Dies kann z. B. durch Fräsen mit einem Formdiamanten erfolgen, wie es z. B. in der DE 37 09 278 A1 beschrieben ist. Die Zahl der Nuten pro Folie kann prinzipiell unbegrenzt sein; vorzugsweise liegt sie im Bereich zwischen 2 und 300, wobei die Zahl der Nuten in den beiden Folien der Grundeinheiten nicht gleich zu sein braucht.

Die Länge der Nuten in den Folien der erfindungsgemäßen Vorrichtung kann entsprechend dem jeweiligen Einsatzgebiet der Vorrichtung gewählt werden. Im allgemeinen liegen die Längen der Nuten zwischen 2 und 50 mm.

Prinzipiell kann der Querschnitt der Nuten nahezu beliebig, beispielsweise halbrund, dreieckig oder trapezförmig, sein. In einer bevorzugten Ausführungsform sind die Nuten jedoch im Querschnitt annähernd rechteckig. Die Nuten für beide Phasen sind vorzugsweise zwischen 10 und 1000 µm, besonders bevorzugt jedoch zwischen 10 und 300 µm breit und hoch. Vorteilhaft ist es, die Nuten für die disperse Phase möglichst kurz zu halten und innerhalb der angegebenen Bandbreite für die Nutabmessungen größer auszulegen als die Nuten für die kontinuierliche Phase. Die Stegbreite zwischen den Nuten liegt vorzugsweise zwischen 10 und 2000 µm, besonders bevorzugt zwischen 10 und 500 µm.

Die beiden Folien werden in der Weise aufeinandergestapelt, daß die jeweils mit den Nuten versehenen Seiten der Folien aufeinander liegen und die Nuten der oberen und der unteren Folie miteinander einen Winkel, vorzugsweise einen rechten Winkel, miteinander einschließen.

Die Nuten erstrecken sich vorzugsweise über die gesamte Seite der Folien. Werden daher zwei Folien in der angegebenen Weise aufeinandergesetzt, erscheinen an den Seiten der Grundeinheit zwei Gruppen von Öffnungen, die dem Anfang und dem Ende jeder der beiden Scharen von Nuten entsprechen. Sind die Folien beispielsweise quadratisch und verlaufen die Nuten parallel zu zwei Kanten, wird beim Aufeinandersetzen der Folien in der Weise, daß die Nuten einen rechten Winkel miteinander einschließen, an jeder Seitenfläche der Grundeinheit eine Gruppe von Öffnungen sichtbar. Die Öffnungen an den Seitenflächen der Grundeinheit dienen als Ein- und Austrittsöffnungen für die Phasen bzw. für das disperse Gemisch. Da in der Regel nur eine Austrittsöffnung vorgesehen wird, können die verbleibenden drei Eintrittsöffnungen entsprechend dem vorgegebenen Dispergiervorgang verschaltet werden.

Für technische Dispergiervorgänge werden eine größere Zahl von Grundeinheiten, beispielsweise 50, aufeinandergestapelt. In diesem Fall werden die einander entsprechenden Öffnungen an den Seiten der Vorrichtung zu Ein- und Austrittsöffnungen zusammengeschaltet.

Bei der erfindungsgemäßen Vorrichtung wird jede Phase in eine Vielzahl von Teilströmen aufgeteilt. Die Teilströme verschiedener Phasen werden in einem Winkel, etwa mit 90°, gegeneinander geführt, so daß sich die Teilströme im gemeinsamen Strömungsrandbereich berühren. Hier bilden sich Mikroscherflächen, an denen die disperse Phase umgelenkt und auf die kontinuierliche Phase verteilt wird.

Aufgrund der lokal auf kleinstem Volumen wirkenden Scherkräfte treten im Bereich der Mikroscherflächen zwischen den beiden Phasen große volumenspezifische Energiedissipationsraten auf. Dabei werden Mikrovolumina aus dem einen Strom abgeschert und mit dem anderen Strom mitgerissen. Das den Dispergiervorgang auslösende Schergefälle zwischen der kontinuierlichen und der dispersen Phase ist bei den bevorzugten Abmessungen der Nuten von 10 bis 1000 µm und dem daraus resultierenden hohen Geschwindigkeitsgradienten extrem hoch.

Die Abmessungen der Mikroscherflächen ergeben sich aus den Breiten a und b der Nuten in den beiden Folien der Grundeinheit. Um den Vorteil, den die Mikrostrukturtechnik aufgrund der Abmessungen im Mikrometerbereich bietet, für Dispergier- und Mischvorgänge effektiv nutzen zu können, sollten die Abmessungen der Mikroscherflächen vorzugsweise kleiner als 500 µm sein. Die auf kleinste Mikroschervolumina begrenzte spezifische Energiedissipationsrate ist hierbei größer als bei den bekannten Vorrichtungen.

In dem Fall, daß die beiden Phasen chemisch nicht miteinander reagieren und auch nicht ineinander löslich sind, wird nun aufgrund der Verteilung der Phasen auf eine große Zahl von Teilströmen eine feine Verteilung der dispersen in der kontinuierlichen Phase erzeugt. In dem Fall, daß die beiden Phasen zusätzlich chemisch miteinander reagieren, hat man durch die feine Verteilung der dispersen Phase in der kontinuierlichen Phase optimale Startbedingungen für den Ablauf der chemischen Reaktion geschaffen.

Die erfindungsgemäße Vorrichtung ist sowohl für Kleinstmengen als auch für technische Durchsätze einsetzbar. Durch Variation der Anzahl der Mikrokanäle können in einem cm$^3$ des Mikrodispergierapparates einige wenige bis mehrere zehntausend Mikroscherflächen untergebracht werden.

Weitere Vorteile sind die Verbesserung der Ausbeute, der Selektivität und der Produktqualität bei den in der erfindungsgemäßen Vorrichtung durchgeführten chemischen Reaktionen. Mit der Vorrichtung lassen sich wegen der Einstellbarkeit der Partikelgrößenverteilungen Produkte mit neuen Eigenschaftsprofilen gewinnen. Ein weiterer Vorteil ist in den sehr geringen inneren Abmessungen der Vorrichtung zu sehen, da sich damit der Aufwand für die Sicherheit und der Betriebsinhalt der Vorrichtung stark vermindern lassen. Bei nachgeschalteten Mikrowärmetauschern kann Wärme effizient abgeleitet werden.

Neben der effizienten Wärmeabfuhr hat die Einleitung eines zwei- oder mehrphasigen Gemisches in die Mikrokanäle eines angeschlossenen Mikrowärmetauschers den Vorteil, daß aufgrund der geringen Kanalabmessungen große Geschwindigkeitsgradienten und damit große Scherkräfte auftreten, die zu einer Unterdrückung der Koaleszenz sowie zu einer Vergleichmäßigung des Partikelgrößenspektrums führen können.

Als bevorzugte Anwendungsfelder für die Vorrichtung sind zu nennen die Herstellung von Emulsionen in Flüssigkeit-Flüssigkeit-Systemen, darüber hinaus die Herstellung von Dispersionen wie z. B. begaste Flüssigkeiten, Schäume, Nebel und Suspensionen (aus Fällprozessen). An den eigentlichen Dispergierprozeß kann sich dabei eine chemische Reaktion anschließen. Weitere Anwendungsfelder sind das Homogenisieren von Dispersionen mit dem Ziel der Einstellung engerer Partikelgrößenverteilungen, das Redispergieren von Dispersionen, um einer Phasentrennung, z. B. durch Koaleszenz, entgegenzuwirken sowie das homogene Mischen von Flüssigkeiten bzw. Gasen.

Die Erfindung wird im folgenden anhand von Figuren näher erläutert. Es zeigen

> Fig. 1 den Aufbau einer Ausführungsform der erfindungsgemäßen Vorrichtung;

> Fig. 2 eine Mikroscherfläche;

> Fig. 3 verschiedene Möglichkeiten der Schaltung;

> Fig. 4 die Kombination der erfindungsgemäßen Vorrichtung mit einem Mikrowärmeübertrager;

> Fig. 5 eine vergleichende Darstellung mit der erfindungsgemäßen Vorrichtung, einer konventionellen zweistufigen Düse und mit einer einstufigen Duse mit nachgeschaltetem Strahldispergator;

> Fig. 6 die mittlere Tropfengröße in Abhängigkeit vom mittleren dynamischen Druckverlust.

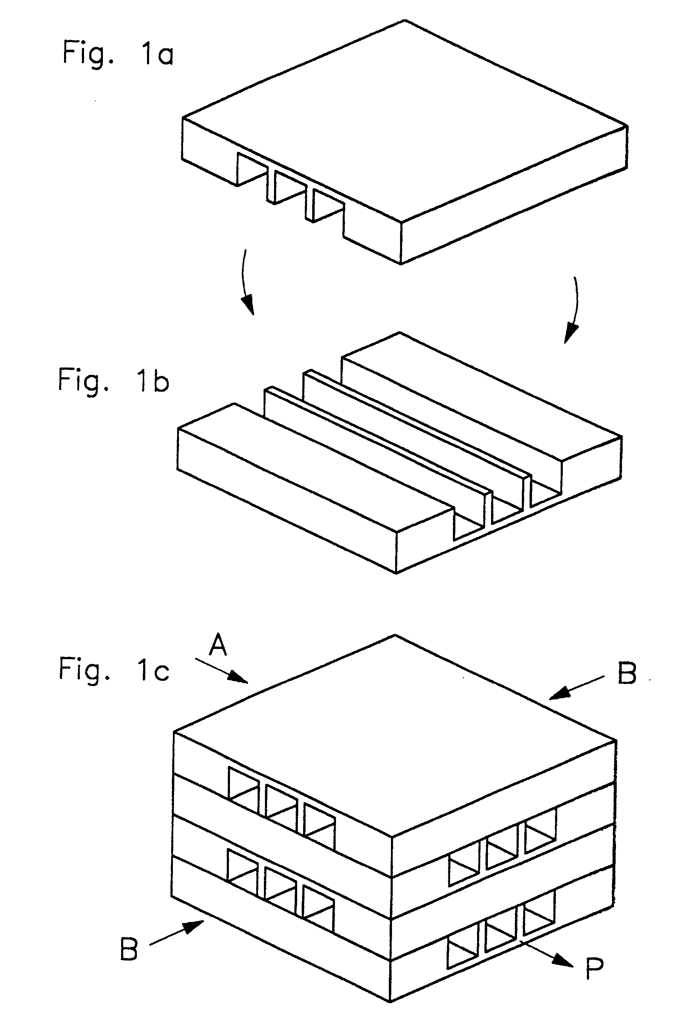

Fig. 1 zeigt schematisch den Aufbau einer Ausführungsform der erfindungsgemäßen Vorrichtung. In Fig. 1a und 1b ist jeweils eine quadratische Folie mit im Querschnitt rechteckigen Nuten, die parallel zu zwei Quadratseiten verlaufen, dargestellt. Die beiden Folien werden, wie durch die Pfeile angedeutet, aufeinandergesetzt. In Fig. 1c ist ein Stapel von zwei Grundeinheiten dargestellt. Die Nuten bilden in jeder Seitenfläche des Stapels Öffnungen, die als Ein- und Austrittsöffnungen genutzt werden. In der dargestellten Ausführungsform strömt die kontinuierliche Phase A von der Rückseite aus in die Vorrichtung. Die disperse Phase B wird an den beiden dazu senkrechten Seitenflächen eingespeist. Das Produkt P verläßt die Vorrichtung vorne rechts.

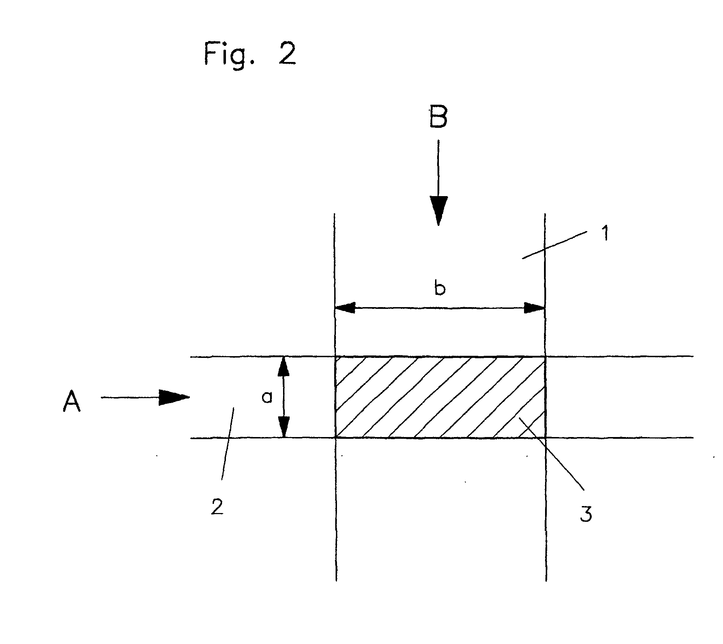

In Fig. 2 ist eine Mikroscherfläche schematisch dargestellt. Die Nuten 1 für die disperse Phase B kreuzen die Nuten 2 für die kontinuierliche Phase A. An der Kreuzungsstelle bildet sich die Mikroscherfläche 3, deren Größe durch die Breiten a und b der beiden Nuten gegeben ist.

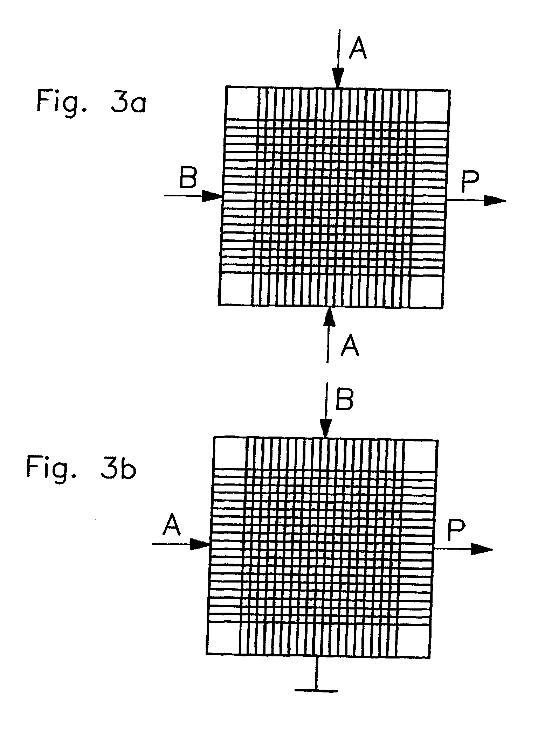

Fig. 3 zeigt verschiedene Möglichkeiten der Schaltung der Phasen. Die Führung der Phasen A (kontinuierliche Phase) und B (disperse Phase) kann innerhalb der Vorrichtung unterschiedlich gestaltet werden. So kann die Zuführung von A und B gegenüber Fig. 1 vertauscht sein (Fig. 3a). Die Zuführung von B braucht nicht beidseitig, sondern kann auch einseitig erfolgen (Fig. 3b). Die in Fig. 3a und 3b dargestellten Verschaltungen lassen sich in beliebiger Weise seriell hintereinander anordnen, wenn beispielsweise eine Mehrfachdispergierung von mehr als 2 Phasen erforderlich ist. Eine serielle Verschaltung mehrerer Vorrichtungen ist auch dann vorteilhaft, wenn für die Dauer einer parallel ablaufenden chemischen Reaktion eine große Phasengrenzfläche aufrechterhalten werden soll, d. h. einer irreversiblen Phasentrennung durch Koaleszenz mittels Redispergierung entgegengewirkt werden muß.

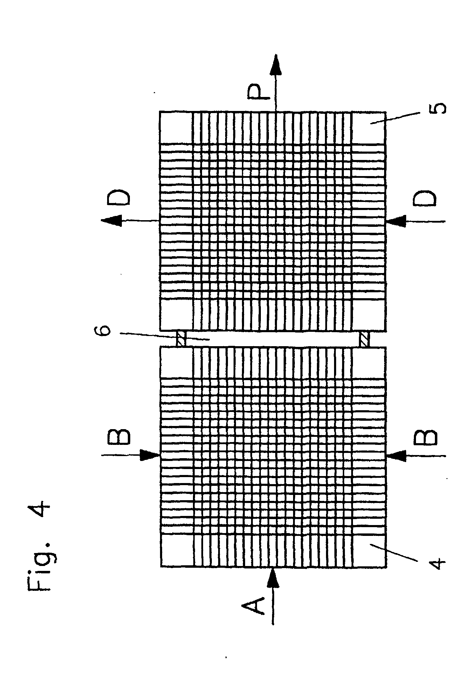

Bei stark exotherm oder endotherm ablaufenden Reaktionen empfiehlt sich die Nachschaltung eines oder mehrerer seriell angeordneter Mikrowärmeübertrager entsprechend Fig. 4. Dafür geeignete Mikrowärmeübertrager sind in der DE 37 09 278 A1 beschrieben. Bei mehreren seriell hintereinander verschalteten Mikrowärmeübertragern kann die volumenspezifische Wärmeaustauschleistung der einzelnen Wärmeübertrager an die jeweilige lokale Wärmeproduktion der chemischen Reaktion angepaßt werden. In der Regel nimmt die Wärmeproduktion längs des Reaktionswegs ab, so daß die volumenspezifische Wärmeaustauschleistung der Mikrowärmetauscher z. B. durch Vergrößern der Mikrokanalabmessungen entsprechend reduziert werden kann. Daraus resultieren deutlich geringere Druckverluste bei der Durchströmung der Nuten. In Fig. 4 sind die kontinuierliche Phase wiederum mit A, die disperse Phase mit B und das Kühl- oder Heizmittel mit D bezeichnet. Die erfindungsgemäße Vorrichtung 4 ist schematisch links dargestellt. Rechts befindet sich ein Mikrowärmeübertrager 5, der von der Vorrichtung 4 durch eine Verteilungszone 6 getrennt ist.

Die Erfindung wird im folgenden anhand eines Beispiels näher erläutert.

Beispiel:

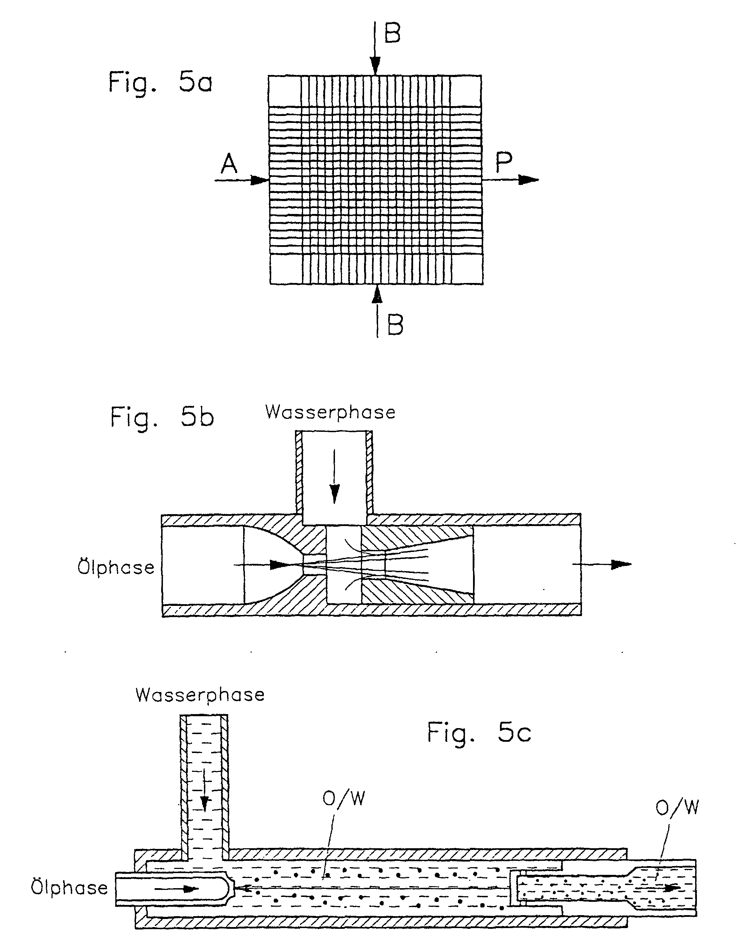

Zur Beurteilung des Dispergierverhaltens des Mikrodispergierapparates bei Flüssigkeit-Flüssigkeit-Systemen wird Paraffinöl W15 (dynamische Viskosität 15 mPas) mit destilliertem Wasser bei 20 °C emulgiert. Zur Stabilisierung der Emulsion wird der Ölphase ein Emulgator zugesetzt (HLB 11.5, 10 Ma.-% bezogen auf die Ölphase). Die Herstellung der Emulsion erfolgt kontinuierlich, indem Paraffinöl und Wasser getrennt dem Dispergierapparat zugeführt werden. Das Volumenstromverhältnis von Paraffinöl zu Wasser beträgt 30 : 70. Der Emulgierprozeß führt zu einer Öl-in-Wasser-Emulsion. Hauptziel der Untersuchungen war die Minimierung des für die Emulsionsherstellung erforderlichen Energieaufwandes. Eingesetzt wurde ein Mikrodispergierapparat entsprechend Fig. 5a.

Der eingesetzte Mikrodispergierapparat weist folgende Spezifikationen auf:

- Passage A:
  33 Metallfolien mit jeweils 77 Mikrokanälen, also insgesamt 2541 Mikrokanäle; Kanalbreite 100 µm, Kanalhöhe 70 µm, Kanallänge 14 mm, Stegbreite zwischen zwei parallelen Mikrokanälen 30 µm
- Passage B:
  33 Metallfolien mit jeweils 39 parallelen Mikrokanälen, also insgesamt 1287 Mikrokanäle; Kanalbreite 200 µm, Kanalhöhe 140 µm, Kanallänge 14 mm, Stegbreite zwischen zwei parallelen Mikrokanälen 60 µm
- Anzahl der Mikroscherflächen: 99099
- aktives Bauteilvolumen: 1 cm$^3$

- Werkstoff: Edelstahl 1.4301.

Um die Leistungsfähigkeit des Mikrodispergierapparates beurteilen zu können, wurden unter gleichen Versuchsbedingungen Emulsionen mittels zweistufiger Düsen (Fig. 5b) bzw. mit einer einstufigen Düse mit nachgeschaltetem Strahldispergator (Fig. 5c) hergestellt.

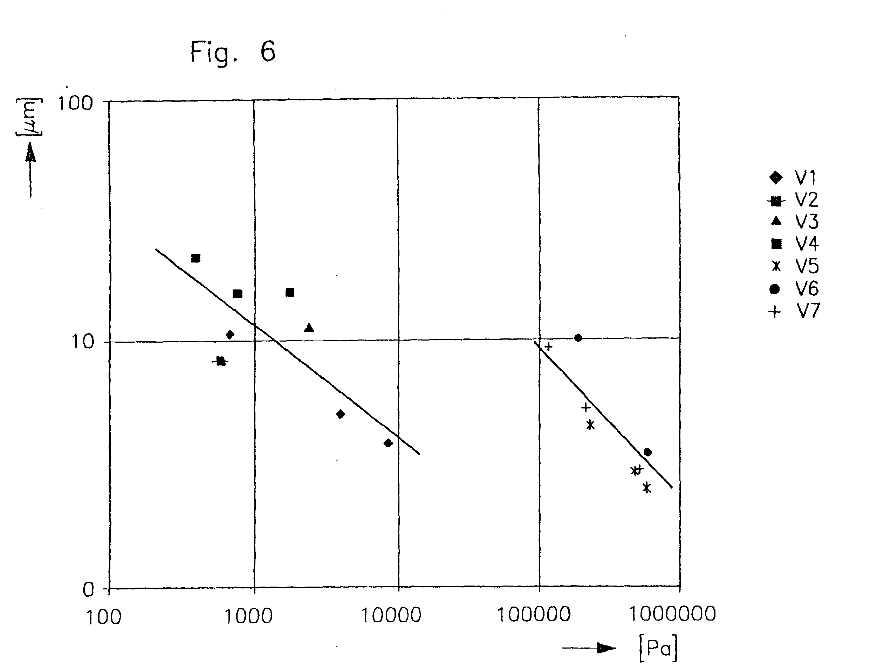

In den Versuchen 1 bis 4 wurden verschiedene Strömungsführungsvarianten unter Einsatz des Mikrodispergierapparates getestet (Fig. 6):

- Versuch V1: Ölzulauf beidseitig über Passage B, Wasserzulauf einseitig über Passage A

- Versuch V2: Wasserzulauf beidseitig über B, Ölzulauf einseitig über A

- Versuch V3: Ölzulauf beidseitig über A, Wasserzulauf einseitig über B

- Versuch V4: Wasserzulauf beidseitig über A, Ölzulauf einseitig über B

In den Versuchen 5 bis 7 wurden unterschiedliche konventionelle Düsen getestet:

- Versuch V5: zweistufige Düse, Durchmesser 1. Düse: 0.3 mm, Durchm. 2. Düse: 0,4 mm

- Versuch V6: zweistufige Düse, Durchmesser 1. Düse: 0,6 mm, Durchm. 2. Düse: 1,1 mm

- Versuch V7: einstufige Düse mit nachgeschaltetem Strahldispergator, Düsendurchmesser 0,6 mm, Strahldispergator mit zwei 0,8 mm-Bohrungen auf dem Umfang:

In Fig. 6 ist der mittels Lichtbeugung ermittelte Medianwert der Tropfengröße (Dimension $\mu m$) über dem für den Emulgiervorgang signifikanten mittleren dynamischen Druckverlust $P_m$ (Dimension Pa) aufgetragen. Die in den Mikrokanälen des Mikrodispergierapparates auftretende Wandreibung bleibt dabei unberücksichtigt. Der mittlere dynamische Druckverlust ergibt sich durch Mittelung über die Volumenströme des Fluids A und B entsprechend

$$P_m = (r/2 \ u^2)_A * V_A/V_{ges} + (r/2 \ u^2)_B * V_B/V_{ges}$$

$P_m$ = mittlerer dynamischer Druckverlust
$r$ = Fluiddichte
$u$ = Fluidgeschwindigkeit in den Mikrokanälen
$V_A$ = Volumenstrom des Fluids A
$V_B$ = Volumenstrom des Fluids B
$V_{ges} = V_A + V_B$

Die Auftragung zeigt, daß zur Herstellung einer bestimmten mittleren Tropfengröße bei Einsatz eines Mikrodispergierapparates deutlich geringere dynamische Druckverluste (ca. Faktor 100) erforderlich sind als bei konventionellen Apparaten.

## Patentansprüche

1. Verfahren zur Herstellung eines dispersen Gemisches mit mindestens einer ersten und einer zweiten Phase,

   a) bei dem sowohl die erste als auch die zweite Phase in Teilströme aufgeteilt werden, so daß
   b) die Teilströme der ersten Phase in einer ersten und und die Teilströme der zweiten Phase in einer zweiten ebenen Schicht liegen,
   c) die Teilströme der ersten Phase in der ersten ebenen Schicht zur Auslösung eines Dispergier- und Vermischungsvorgangs in einem Winkel auf die Teilströme in der zweiten ebenen Schicht zugeführt werden, wobei
   d) die Teilströme an Kreuzungspunkten der Teilströme der ersten mit den Teilströmen der zweiten Phase zusammengeführt und vermischt werden,
   e) die ebenen Schichten parallel und unmittelbar übereinander angeordnet sind.

2. Vorrichtung zur Herstellung eines dispersen Gemisches aus mindestens einer ersten und einer zweiten Phase,
   bestehend aus

   - mindestens einer Grundeinheit, die
   - zwei Folien umfaßt,
   - in die jeweils auf einer Seite der Folien eine parallele Schar von Nuten eingebracht ist,

   wobei in der Grundeinheit die zwei Folien in der Weise zusammengesetzt sind, daß

   - die mit Nuten versehenen Seiten der beiden Folien aufeinander liegen und
   - miteinander einen Winkel bilden.

3. Vorrichtung gemäß Anspruch 2 mit einem Winkel von 90°.

4. Vorrichtung gemäß Anspruch 3 mit rechteckigen Folien, bei denen die Nuten parallel zu zwei Kanten der Folien verlaufen.

5. Vorrichtung gemäß einem der Ansprüche 2 bis 4 mit Nuten, die zwischen 10 und 1000 $\mu m$ breit und tief sind.

**6.** Vorrichtung nach einem der Ansprüche 2 bis 5, mit einem dem Produktausgang der Vorrichtung nachgeschalteten Mikro-Wärmetauscher.

**Claims**

**1.** Method of producing a dispersed mixture with at least one first phase and one second phase, wherein

   a) both the first phase and the second phase are divided into split streams, so that
   b) the split streams of the first phase lie in a first flat layer, and the split streams of the second phase lie in a second flat layer, and
   c) the split streams of the first phase in the first flat layer are supplied at an angle to the split streams in the second flat layer to start a dispersing and mixing process,
   d) the split streams being combined and mixed at locations where the split streams of the first phase intersect the split streams of the second phase, and
   e) the flat layers being disposed parallel to, and directly above, each other.

**2.** Apparatus for producing a dispersed mixture from at least one first phase and one second phase, said apparatus comprising

   - at least one basic unit which includes
   - two foils,
   - which each have a number of parallel grooves on one side of the foils,

   the two foils being combined in the basic unit in such a manner that

   - the sides of the two foils provided with grooves lie one on top of the other, and
   - form an angle with each other.

**3.** Apparatus according to claim 2, having an angle of 90°.

**4.** Apparatus according to claim 3, having rectangular foils, wherein the grooves extend parallel to two edges of the foils.

**5.** Apparatus according to one of claims 2 to 4, having grooves which have a width and depth between 10 and 1000 µm.

**6.** Apparatus according to one of claims 2 to 5, having a micro-heat exchanger connected downstream of the product outlet section of the apparatus.

**Revendications**

**1.** Procédé de fabrication d'un mélange dispersé comprenant au moins une première et une seconde phase, dans lequel :

   a) la première et la seconde phase sont divisées chacune en courants élémentaires,
   b) les courants élémentaires de la première et de la seconde phase se trouvent dans une première et une seconde couche plane respectivement,
   c) les courants élémentaires de la première phase, dans la première couche plane, pour déclencher le processus de dispersion et de mélange sont amenés à la rencontre des courants élémentaires situés dans la seconde couche plane, sous un certain angle,
   d) les courants élémentaires de la première et de la seconde phase sont amenés ensemble et se mélangent à leurs points de croisement,
   e) les couches planes sont parallèles et directement superposées.

**2.** Dispositif de fabrication d'un mélange dispersé à partir d'au moins une première et une seconde phase, dans lequel :

   - il existe au moins une unité de base, comprenant deux feuilles,
   - dans chaque unité de base, chaque feuille porte sur un côté une série de rainures parallèles, les deux feuilles d'une unité de base sont assemblées de manière que

      - les rainures soient face à face,
      - et fassent un certain angle entre elles.

**3.** Dispositif selon la revendication 2,
**caractérisé en ce que**
l'angle des rainures est de 90°.

**4.** Dispositif selon la revendication 3,
**caractérisé en ce que**
les feuilles sont rectangulaires, et les rainures de chaque feuille sont parallèles à deux côtés du rectangle.

**5.** Dispositif selon l'une quelconque des revendications 2 à 4,
**caractérisé en ce que**
les rainures ont une largeur et une profondeur comprises entre 10 et 1000 microns.

**6.** Dispositif selon l'une quelconque des revendications 2 à 5,
**caractérisé en ce qu'**
un microéchangeur thermique est monté en aval du point où le produit sort de l'appareil.

Fig. 1a

Fig. 1b

Fig. 1c

A    B

B    P

Fig. 2

Fig. 3a

Fig. 3b

Fig. 4

Fig. 5a

B

A ⟶ ⟶ P

B

Fig. 5b  Wasserphase

Ölphase ⟶

Wasserphase

Fig. 5c

O/W   O/W

Ölphase ⟶

Fig. 6